# EUROPÄISCHE PATENTSCHRIFT

(11) **EP 2 347 145 B1**
(45) Veröffentlichungstag und Bekanntmachung des Hinweises auf die Patenterteilung: **19.12.2012**
(21) Anmeldenummer: 09749058.5
(22) Anmeldetag: 29.10.2009
(51) Int. Cl.: F16F 15/12, F16F 15/131

(54) **TORSIONSSCHWINGUNGSDÄMPFER FÜR DEN ANTRIEBSSTRANG EINES FAHRZEUGS**
TORSIONAL VIBRATION DAMPER FOR THE DRIVE TRAIN OF A VEHICLE
AMORTISSEUR DE VIBRATIONS TORSIONNELLES POUR LA CHAÎNE CINÉMATIQUE D'UN VÉHICULE

(30) Priorität: 17.11.2008 DE 102008043781
(43) Veröffentlichungstag der Anmeldung: 27.07.2011
(73) Patentinhaber: ZF Friedrichshafen AG, 88038 Friedrichshafen (DE)
(72) Erfinder: SCHIERLING, Bernhard, 97273 Kürnach (DE); SCHÖNEICH, Florian, 97447 Gerolzhofen (DE)
(86) Internationale Anmeldenummer: PCT/EP2009/064277
(87) Internationale Veröffentlichungsnummer: WO 2010/054935

(56) Entgegenhaltungen:
- DE-A1- 2 117 590
- DE-A1- 10 037 680
- DE-A1- 10 118 821
- DE-C1- 4 416 949

## Beschreibung

Die vorliegende Erfindung betrifft einen Torsionsschwingungsdämpfer für den Antriebsstrang eines Fahrzeugs, umfassend eine mit einem Antriebsorgan zur gemeinsamen Drehung um eine Drehachse zu verbindende Primärseite und eine vermittels einer Dämpferfederanordnung zur Drehomentübertragung mit der Primärseite gekoppelte Sekundärseite, wobei die Sekundärseite ein in seinem radial äußeren Bereich mit der Dämpferfederanordnung zusammenwirkendes erstes Abtriebsscheibenelement umfasst, und ein mit dem ersten Abtriebsscheibenelement vermittels einer axial- oder/und radial elastischen Kopplungsfederanordnung gekoppeltes zweites Abtriebsscheibenelement umfasst, wobei die Kopplungsfederanordnung eine Mehrzahl von mit dem ersten Abtriebsscheibenelement und dem zweiten Abtriebsscheibenelement verbundenen blattfederartigen Federabschnitten umfasst.

Ein derartiger Torsionsschwingungsdämpfer ist aus der DE 101 18 821 A1 bekannt. Die Sekundärseite dieses bekannten Torsionsschwingungsdämpfers ist mit einem radial äußeren ersten Abtriebsscheibenelement und einem etwas weiter radial innen liegenden zweiten Abtriebsscheibenelement ausgebildet. Die beiden Abtriebsscheibenelemente sind durch im Wesentlichen radial sich erstreckende Blattfederelemente miteinander zur Drehmomentübertragung gekoppelt, wobei diese Blattdfederelement mit den beiden Abtriebsscheibenelementen durch Vernietung verbunden sind. In seinem radial inneren Bereich weist das zweite Abtriebsscheibenelement, das in diesem Bereich als Nabe ausgebildet ist, eine Innenverzahnung auf, über welche eine drehfeste Verbindung mit einer Abtriebswelle, beispielsweise einer Getriebeeingangswelle, hergestellt werden kann.

Durch den mit einer Elastizität in seiner Sekundärseite ausgebildeten Torsionsschwingungsdämpfer wird es möglich, eine Taumelentkopplung zwischen dem Antriebsbereich, also beispielsweise einer Kurbelwelle, und dem Abtriebsbereich, also beispielsweise einer Getriebeeingangswelle bzw. einer zu einer Doppelkupplung oder dgl. führenden Welle oder dgl. zu realisieren.

Die DE 44 16 949 C1 offenbart eine taumelfähige Kupplungsscheibe, bei welcher ein radial außen liegender und die Reibbeläge tragender, ringartiger Bereich mit einem radial inneren Nabenbereich durch vier paarweise, näherungsweise parallel zueinander angeordnete Blattfederelemente verbunden sind. Die beiden Paare sind mit einem Winkel von 90° zueinander versetzt, so dass die Blattfederelemente der verschiedenen Paare sich einander überkreuzend liegen.

Es ist die Aufgabe der vorliegenden Erfindung, einen Torsionsschwingungsdämpfer für den Antriebsstrang eines Fahrzeugs vorzusehen, bei welchem bei Taumelentkopplung zwischen Antriebsbereich und Abtriebsbereich ein verbessertes Drehmomentübertragungsverhalten erzielt werden kann.

Erfindungsgemäß wird diese Aufgabe gelöst durch einen Antriebsstrang eines Fahrzeugs, umfassend eine mit einem Antriebsorgan zur gemeinsamen Drehung um eine Drehachse zu verbindende Primärseite und eine vermittels einer Dämpferfederanordnung zur Drehomentübertragung mit der Primärseite gekoppelte Sekundärseite, wobei die Sekundärseite ein in seinem radial äußeren Bereich mit der Dämpferfederanordnung zusammenwirkendes erstes Abtriebsscheibenelement umfasst, und ein mit dem ersten Abtriebsscheibenelement vermittels einer axial- oder/und radialelastischen Kopplungsfederanordnung gekoppeltes zweites Abtriebsscheibenelement umfasst, wobei die Kopplungsfederanordnung eine Mehrzahl von mit dem ersten Abtriebsscheibenelement und dem zweiten Abtriebsscheibenelement verbundenen blattfederartigen Federabschnitten umfasst.

Dabei ist weiter vorgesehen, dass wenigstens zwei der Federabschnitte sich in einem radialen Bereich zwischen ihrer Verbindung mit dem ersten Abtriebsscheibenelement und dem zweiten Abtriebsscheibenelement überkreuzen.

Durch sich überkreuzende Federabschnitte der Kopplungsfederanordnung ist gewährleistet, dass unabhängig von der Drehmomentübertragungsrichtung eine Relativdrehung zwischen den beiden Abtriebsscheibenelementen nicht auftreten kann und weiterhin die Federabschnitte im Wesentlichen nicht auf Stauchung belastet werden können. Dies bedeutet, dass auch vergleichsweise große Drehmomente in einem derartigen Torsionsschwingungsdämpfer bei Taumelentkopplung in der Sekundärseite desselben übertragen werden können.

Dabei kann vorzugsweise vorgesehen sein, dass die Federabschnitte bezüglich des zweiten Abtriebsscheibenelements sich im Wesentlichen tangential erstrecken.

Die Übertragbarkeit sehr hoher Drehmomente kann weiter dadurch gewährleistet werden, dass in Umfangsrichtung vier Paare von sich gegenseitig kreuzenden Federabschnitten vorgesehen sind, wobei selbstverständlich diese vier Paare von sich gegenseitig kreuzenden Federabschnitten vorzugsweise gleichmäßig verteilt um die Drehachse vorzusehen sind.

Beispielsweise kann der Aufbau derart sein, dass eine Mehrzahl von wenigstens zwei Federabschnitte bereitstellenden Federelementen vorgesehen ist, wobei jedes Federelement in seinem Mittenbereich mit dem zweiten Abtriebsscheibenelement verbunden ist und in seinen Endbereichen mit dem ersten Abtriebsscheibenelement verbunden ist. Je nachdem, in welcher Drehrichtung eine Relativdrehbelastung zwischen den beiden Abtriebsscheibenelementen auftritt, wird ein Federelement jeweils mit einem seiner Federabschnitte auf Zug- und damit zur Drehmomentübertragung belastet.

Dabei kann beispielsweise vorgesehen sein, dass die Federelemente bezüglich des zweiten Abtriebsscheibenelements sich im Wesentlichen tangential erstrecken, wobei weiterhin jedes Federelement sich mit zwei anderen Federelementen kreuzen kann.

Bei einer hinsichtlich der in Umfangsrichtung möglichst gleichmäßigen Masseverteilung vorteilhaften Variante wird vorgeschlagen, dass vier Federelemente sich paarweise im Wesentlichen parallel zueinander erstreckend vorgesehen sind, wobei jedes Federelement eines Paares die beiden Federelemente des anderen Paares kreuzt.

Gemäß einer weiteren, besonders hinsichtlich der Schwingungsdämpfungscharakteristik eines Torsionsschwingungsdämpfers vorteilhaften Variante wird vorgeschlagen, dass eine sekundärseitige Schwungmasse mit dem zweiten Abtriebsscheibenelement verbunden ist. Somit kann eine ausreichend hohe sekundärseitige Masse sicher gestellt werden. Es ist jedoch darauf hinzuweisen, dass dieser Aspekt auch ein selbständig sehr vorteilhaft sich auswirkender Aspekt ist, der alleine oder in Kombination mit dem Vorsehen sich kreuzender Federabschnitte realisierbar ist.

Die Schwungmasse kann vorzugsweise ringscheibenartig ausgebildet sein, um bei größtmöglicher Masse eine gleichmäßige Verteilung derselben in Umfangsrichtung zu erlangen.

Zur Verbindung der Schwungmasse mit dem zweiten Abtriebsscheibenelement wird vorgeschlagen, dass am zweiten Abtriebsscheibenelement in Umfangsrichtung aufeinander folgend mehrere Verbindungsbereiche vorgesehen sind, wobei in wenigstens einem Verbindungsbereich wenigstens ein Federabschnitt der Kopplungsfederanordnung und ein Gegen-Verbindungsbereich der Schwungmasse mit dem zweiten Abtriebsscheibenelement verbunden ist, wobei vorzugsweise vorgesehen sein kann, dass der Gegen-Verbindungsbereich mit dem zweiten Abtriebsscheibenelement radial außerhalb der Verbindung des Federabschnitts mit dem zweiten Abtriebsscheibenelement verbunden ist.

Bei einer auf Grund des einfachen Aufbaus besonders vorteilhaften Variante wird vorgeschlagen, dass die Schwungmasse aus Blechmaterial aufgebaut ist. Selbstverständlich kann die Schwungmasse auch aus Gussmaterial aufgebaut werden.

Vor allem dann, wenn die Schwungmasse aus Blechmaterial aufgebaut ist, kann zur Erhöhung des sekundären Massenträgheitsmoments vorgesehen sein, dass die Schwungmasse in ihrem radial äußeren Bereich faltenartig gebogen ist.

Die Schwungmasse ist vorzugsweise in ihrem radial inneren Bereich mit dem Abtriebsscheibenelement verbunden.

Eine besonders stabile, gleichwohl jedoch leicht herstellbare Verbindung zwischen der Schwungmasse einerseits und dem zweiten Abtriebsscheibenelement andererseits eine Nietverbindung erzielt werden.

Weiter kann bei dem erfindungsgemäßen Torsionsschwingungsdämpfer vorgesehen sein, dass das zweite Abtriebsscheibenelement in seinem radial äußeren Bereich mit der Kopplungsfederanordnung verbunden ist und in seinem radial inneren Bereich einen innenverzahnten Nabenbereich zur Ankopplung an ein Abtriebsorgan umfasst.

Auch die Verbindung zwischen dem zweiten Abtriebsscheibenelement und der Kopplungsfederanordnung kann als Nietverbindung ausgestaltet sein.

Die vorliegende Erfindung wird nachfolgend mit Bezug auf die beiliegenden

Figuren detailliert beschrieben.

Es zeigt:
- Figur 1: eine Axialansicht eines erfindungsgemäßen Torsionsschwingungsdämpfers;

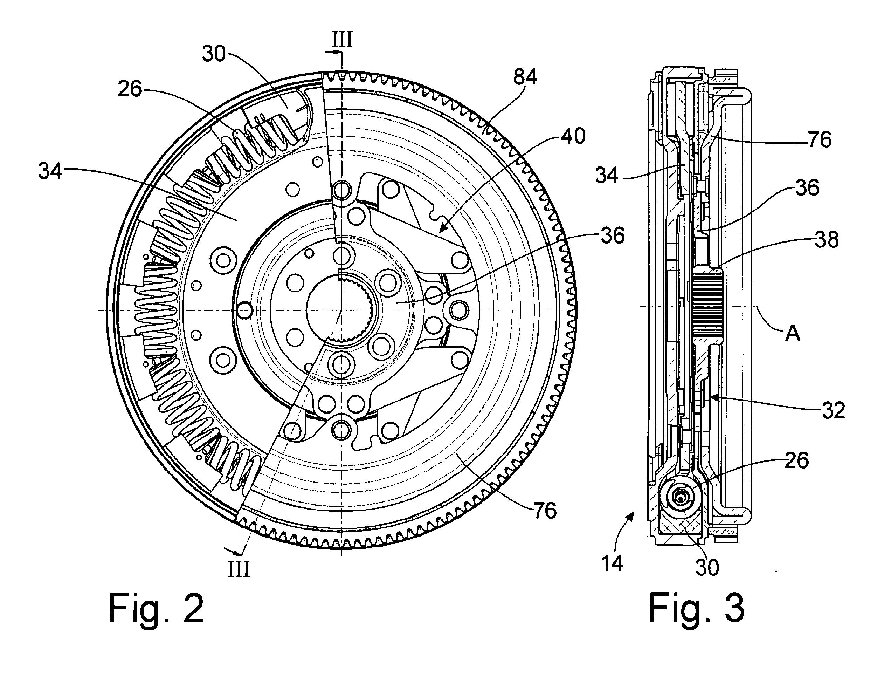

- Figur 2: eine teilweise aufgeschnittene Axialansicht des Torsionsschwingungsdämpfers der Fig. 1;
- Figur 3: eine Längsschnittansicht des Torsionsschwingungsdämpfers der Figuren 1 und 2, geschnitten längs einer Linie III-III in Fig. 2;

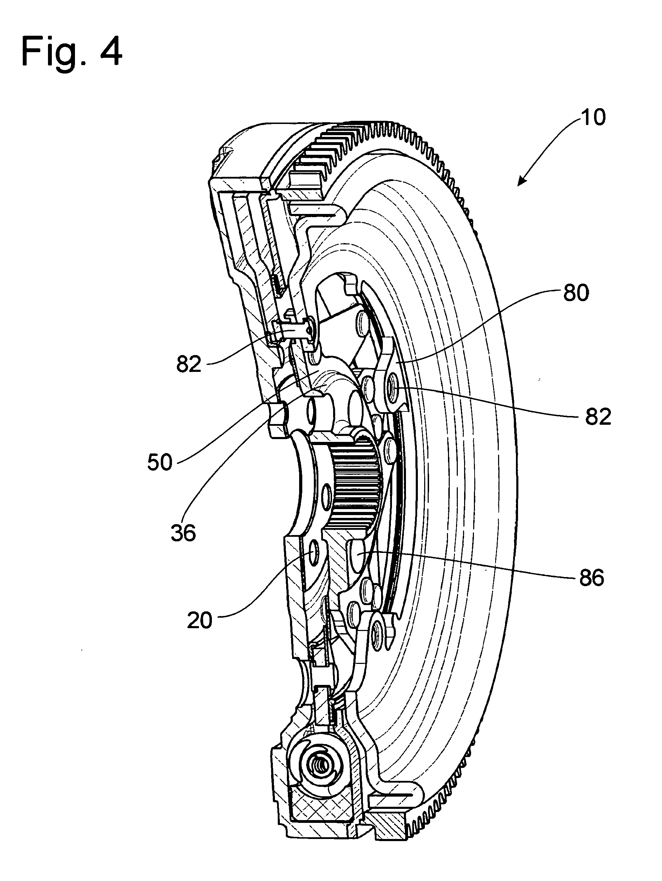

- Figur 4: eine perspektivische Darstellung des in Fig. 3 gezeigten Schnittes;
- Figur 5: eine Schnittdarstellung des Dämpfers der Fig. 1, geschnitten längs einer Linie V-V in Fig. 1;
- Figur 6: eine Schnittdarstellung des Däpfers in Fig. 1, geschnitten längs einer Linie VI-VI in Fig. 1;
- Figur 7: den radial äußeren Bereich des in Fig. 6 dargestellten Schnittes, vergrößert.

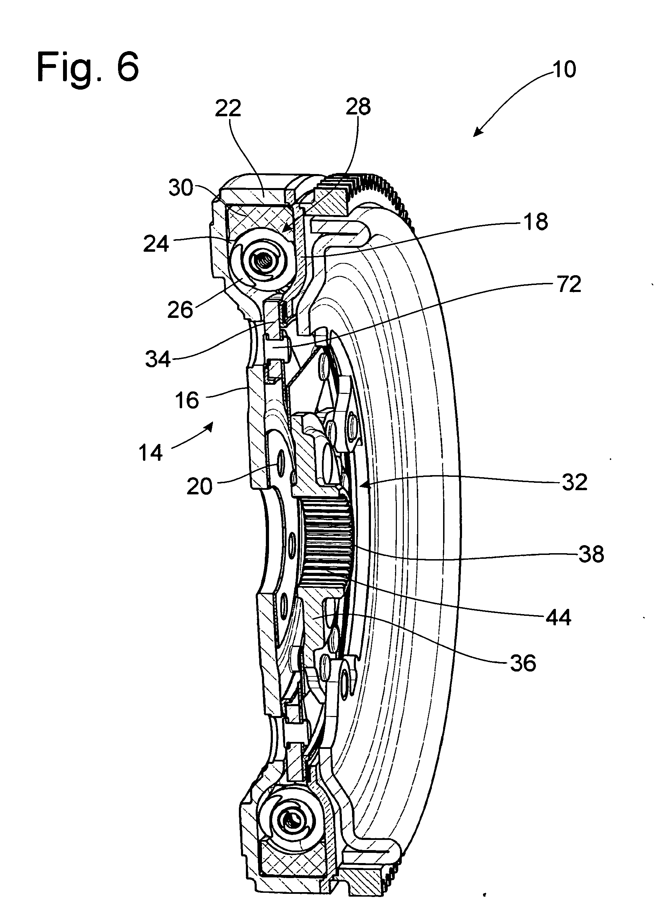

In den Figuren ist ein erfindungsgemäß aufgebauter Torsionsschwingungsdämpfer für den Antriebsstrang eines Fahrzeugs allgemein mit 10 bezeichnet. Dieser weist eine beispielsweise in Fig. 6 deutlich erkennbare Primärseite 14 auf, die in einem radial inneren Bereich an ein Antriebsorgan, beispielsweise eine Kurbelwelle einer Brennkraftmaschine, fest angebunden werden kann. Die Primärseite 14 umfasst zwei Deckscheibenelemente 16, 18, wobei das Deckscheibenelement 16 radiale Innenöffnungen 20 zum Hindurchführen von zur Festlegung am Antriebsorgan dienenden Schraubbolzen aufweist. Am radial äußeren Bereich weist das Deckscheibenelement 16 einen axialen Ansatz 22 auf, an dessen freies Ende das andere Deckscheibenelement 18 angebunden ist. In dem bezüglich einer Drehachse A radial außen liegenden Bereich begrenzen die beiden Deckscheibenelemente 16, 18 einen Raumbereich 24, in welchem die Dämpferfedern 26 einer allgemein mit 28 bezeichneten Dämpferfederanordnung angeordnet sind. Die Dämpferfedern 26 sind im allgemeinen als Schraubendruckfedern aufgebaut und erstrecken sich näherungsweise in Umfangsrichtung bzw. tangential und können auch ineinander geschachtelt jeweils mehrere Federn umfassen. An den beiden Deckscheibenelementen 16, 18 sind Abstützbereiche vorgesehen, an welchen die Dämpferfedern 26 sich in Umfangsrichtung zur Drehmomentübertragung, beispielsweise über Federteller 30, abstützen können.

Eine Sekundärseite 32 des Torsionsschwingungsdämpfers 10 umfasst ein radial äußeres erstes Abtriebsscheibenelement 34 und ein radial inneres zweites Abtriebsscheibenelement 36. Das erste Abtriebsscheibenelement 34 greift nach radial außen in den zwischen den beiden Deckscheibenelementen 16, 18 gebildeten Raumbereich 24 ein und weist ebenfalls Abstützbereiche für die Dämpferfedern 26 bzw. die Federteller 30 auf. Das zweite Abtriebsscheibenelement 36 bildet in seinem radial inneren Bereich einen Nabenbereich 38 mit einer Innenverzahnung 40, an welche eine Getriebeeingangswelle oder eine zur Ankopplung des Eingangsbereichs einer Doppelkupplung oder dgl. dienende Welle zur gemeinsamen Drehung mit der Sekundärseite 32 angekoppelt werden kann.

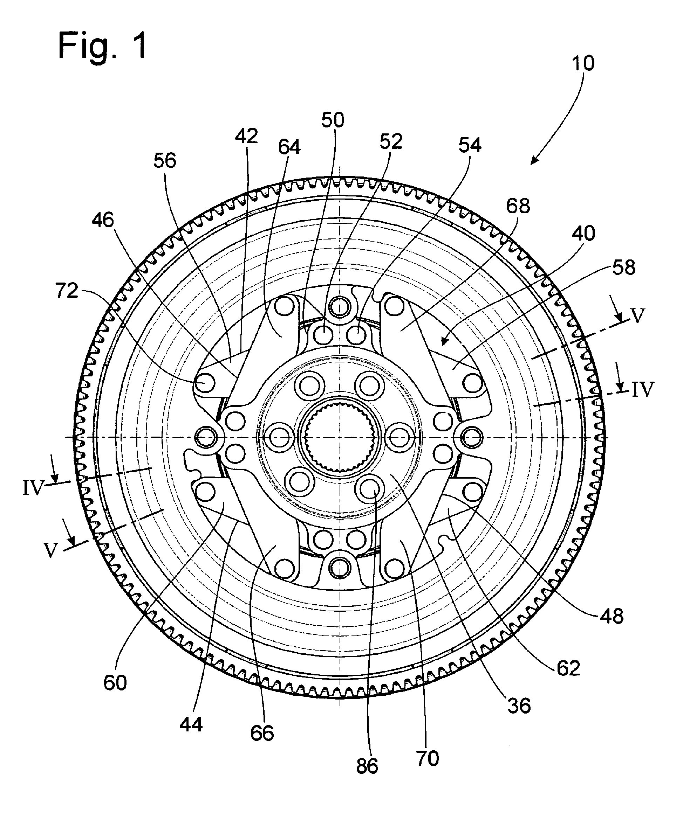

Eine in der Figur 1 deutlich erkennbare Kopplungsfederanordnung 40 stellt eine drehfeste Kopplung zwischen den beiden Abtriebsscheibenelementen 34, 36 her. Die Kopplungsfederanordung 40 umfasst im dargestellten Beispiel vier Federelemente 42, 44, 46, 48. Diese sind im Wesentlichen langgestreckt ausgebildet und jeweils paarweise nebeneinander und bezüglich einer die Drehachse A schneidenden Ebene symmetrisch angeordnet. Die beiden Paare 42, 44 einerseits und 46, 48 andererseits sind um die Drehachse A um 90° bezüglich einander drehversetzt, so dass jedes Federelement 42, 44, 46, 48 ein Federelement des jeweils anderen Paares überkreuzt.

In ihrem Längenmittenbereich sind die Federelemente 42, 44, 46, 48 an am zweiten Abtriebsscheibenelement 36 nach radial außen greifend gebildeten Verbindungsbereichen 50 jeweils durch zwei in Umfangsrichtung aufeinander folgende Nietbolzen 52, 54 festgelegt. Ausgehend von dieser Verbindung erstrecken sich die bezüglich des zweiten Abtriebsscheibenelements 36 näherungsweise tangential angeordneten Federelemente 42, 44, 46, 48 mit jeweiligen Federabschnitten 56, 58, 60, 62, 64, 66, 68, 70 in Umfangsrichtung bzw. nach radial außen in den Bereich des ersten Abtriebsscheibenelements 34. Dort sind diese Federabschnitte 56, 58, 60, 62, 64, 66, 68, 70 durch Nietbolzen 72 mit dem ersten Abtriebsscheibenelement 34 fest verbunden.

Man erkennt insbesondere in der Darstellung der Fig. 1, dass durch die um 90° bezüglich einander verdrehte Positionierung der beiden Paare von Federelementen 42, 44, 46, 48 auch für die einzelnen Federabschnitte eine gegenseitig sich überkreuzende Anordnung erhalten wird. So kreuzen sich die Federabschnitte 56, 64 im radialen Bereich zwischen den beiden Abtriebsscheibenelementen 34, 36. Entsprechendes gilt für die beiden Federabschnitte 58, 68, die beiden Federabschnitte 62, 70 und die beiden Federabschnitte 60, 66. Es existieren also vier Paare von sich kreuzenden Federabschnitten, die in Umfangsrichtung um die Drehachse A näherungsweise gleichmäßig verteilt angeordnet sind.

Durch die Federelemente 42, 44, 46, 48 wird eine taumelweiche Kopplung der beiden Abtriebsscheibenelemente 34, 36 der Sekundärseite 32 erhalten, was eine entsprechende Achsversatzkompensation bzw. Achswinkelkompensation zwischen einer Antriebswelle und einer Abtriebswelle ermöglicht. Auf Grund dieser Taumelentkopplung wird eine durch Taumelbewegung induzierte Belastung in denjenigen Bereichen, in welchen die Dämpferfedern 26 sich an der Primärseite 14 bzw. Sekundärseite 32 abstützen, gemindert. Da die Drehmomentübertragungsverbindung zwischen den beiden Abtriebsscheibenelementen 34, 36 durch eine Vielzahl von näherungsweise in tangentialer Richtung bezüglich des inneren, zweiten Abtriebsscheibenelements 36 sich erstreckenden Federabschnitten erfolgt, die wechselseitig sich überkreuzen, ist sicher gestellt, dass unabhängig von der Drehmomentübertragungsrichtung ein Teil der Federabschnitte auf Zug belastet wird, so dass eine Stauchungsbelastung des anderen Teils der Federabschnitte vermieden wird. Gleichzeitig sorgt diese Anordnung der Federabschnitte dafür, dass eine drehfeste Kopplung zwischen den beiden Abtriebsscheiben-elementen erhalten wird. Da weiterhin durch die näherungsweise tangentiale Positionierung die Federabschnitte eine vergleichsweise lange Erstreckung zwischen ihren Anbindestellen an die Abtriebsscheibenelemente aufweisen, kann die Biegeweichheit noch weiter vergrößert werden, was eine entsprechend verbesserte Taumelentkopplung mit sich bringt.

Man erkennt weiter in den Figuren, dass die beiden Abtriebsscheibenelemente bezüglich einander in Achsrichtung versetzt liegen, so dass die Federelemente bzw. deren Federabschnitte sich ohne Axialkröpfung zwischen diesen erstrecken können. Dabei liegen sie in ihrem radial inneren Bereich an einer Motor-zugewandt zu positionierenden Seite des zweiten Abtriebsscheibenelements 36 an, und in ihrem radial äußeren Bereich an einer Getriebe-zugewandten zu positionierenden Seite des radial äußeren ersten Abtriebsscheibenelements 34.

Es sei darauf hingewiesen, dass selbstverständlich die Federelemente bzw. deren Federabschnitte, so wie dies in den Figuren dargestellt ist, einlagig aufgebaut sein können. Auch der Aufbau der Federelemente aus mehreren, gestapelt angeordneten Blattfedern ist möglich.

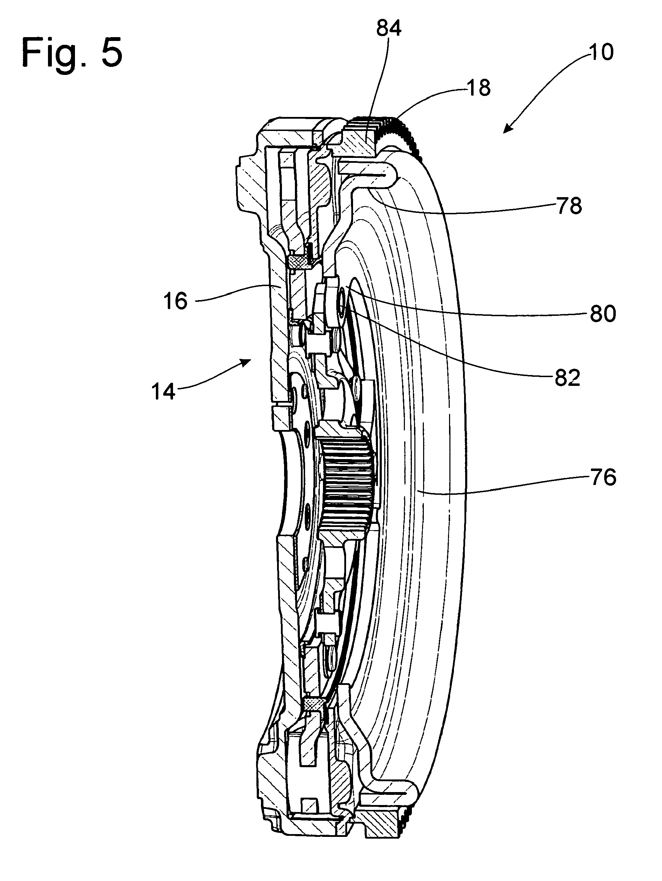

In Figur 5 erkennt man beispielsweise einen weiteren Aspekt des erfindungsgemäß aufgebauten Torsionsschwingungsdämpfers 10. Dieser weist sekundärseitig eine ringscheibenartig aufgebaute Schwungmasse 76 auf. Im dargestellten Beispiel ist diese aus Blechmaterial gefertigt und ist in ihrem radial äußeren Bereich 78 faltenartig gebogen, um dort eine vergleichsweise hohe Masse, insgesamt also ein hohes Massenträgheitsmoment bereit stellen zu können. In ihrem radial inneren Bereich weist die Schwungmasse 76 eine Mehrzahl von Gegen-Verbindungsbereichen 80 auf, in welchen die Schwungmasse 76 beispielsweise durch Nietelemente 82 mit den Verbindungsbereichen 50 des zweiten Abtriebsscheibenelements 36 fest verbunden ist. Man erkennt hierzu, dass diese Verbindungsbereiche 50 so gestaltet sind, dass sie in ihrem radial inneren Bereich eine ausreichende Umfangserstreckung aufweisen, um die beiden Nietelemente 52, 54 für die Federelemente aufzunehmen, nach radial außen hin dann sich verjüngen, um gleichwohl noch die Nietelemente 82 aufnehmen zu können. Diese liegen dann in Umfangsrichtung jeweils zwischen einem zugeordneten Paar von Nietelementen 52, 54.

Durch das Vorsehen einer derartigen zusätzlichen Schwungmasse 76 an der Sekundärseite 32 wird die sekundärseitige Masse bzw. das sekundärseitige Massenträgheitsmoment erhöht, was zu einer verbesserten Schwingungsentkopplungscharakteristik des Torsionsschwingungsdämpfers 10 führt. Dabei ist zu berücksichtigen, dass das Abtriebsdrehmoment radial innen über den Nabenbereich 38 erfolgt, nicht also wie bei herkömmlichen Massenschwungrädern über eine radial außen liegende und eine Reibfläche für eine Reibungskupplung bereit stellende Schwungscheibe. Die Schwungmasse 76 hat also tatsächlich nur die Funktionalität der Erhöhung des sekundärseitigen Masseträgheitsmoments, dient jedoch nicht als Widerlager für die Kupplungsscheibe einer Reibungskupplung. Dies ist besonders daher vorteilhaft, da damit auch vermieden werden kann, dass durch Kupplungsbetätigungsvorgänge Axialkräfte in die Schwungmasse 76 und damit auch das axial weich aufgehängte zweite Abtriebsscheibenelement 36 eingeleitet werden.

Vor allem, wenn die Schwungmasse 76 aus Blechmaterial aufgebaut ist, kann diese bei der Möglichkeit, insbesondere radial außen dennoch eine hohe Masse bereit zu stellen, im radial inneren Bereich vergleichsweise dünn gehalten werden, insbesondere dort, wo die Anbindung an das zweite Abtriebsscheibenelement 36 erfolgt. Dies ist vorteilhaft, da in diesem Bereich im allgemeinen nur vergleichsweise wenig Bauraum zur Verfügung steht. Bei Ausgestaltung der Schwungmasse 76 als Gussbauteil könnte hier eine dünne Formgebung durch Einsatz entsprechend geformter Gussformen erlangt werden.

Da die Schwungmasse 76 direkt an das zweite Abtriebsscheibenelement 36 angekoppelt ist, erfolgt die Anbindung nicht über die Kopplungsfederanordnung 40, was zu einer Entlastung derselben führt. Auch kann in einfacher Art und Weise eine auch unter dynamischen Verhältnissen stabile Auswuchtung der Sekundärseite 32 bzw. des gesamten Torsionsschwingungsdämpfers 10 erzielt werden.

Die primärseitige Masse kann beispielsweise dadurch erhöht werden, dass an den beiden Deckscheibenelementen 16, 18 ein Anlasserzahnkranz 84 vorgesehen ist.

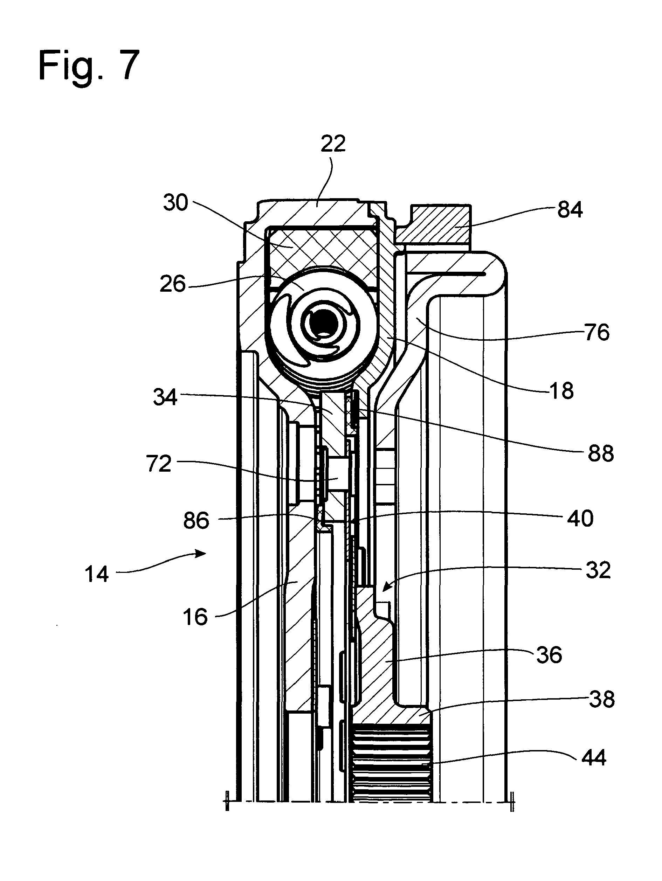

Ein weiterer Einfluss auf das Schwingungsdämpfungsverhalten kann dadurch erlangt werden, dass der Raumbereich 24, in welchem die Dämpferfedern 26 angeordnet sind, mit viskosem Medium gefüllt wird. Um den Austritt dieses viskosen Mediums zu verhindern, kann durch den Einsatz zweier, beispielsweise in der Fig. 7 deutlich erkennbarer tellerfederartig ausgestalteter Dichtungselemente 86, 88 ein im Wesentlichen fluiddichter Anschluss an die beiden Deckscheibenelemente 16, 18 erzielt werden. Diese haben zusätzlich oder alternativ auch die Funktion, das radial außen liegende erste Abtriebsscheibenelement 34 axial zentriert zwischen den beiden Deckscheibenelementen zu halten, wodurch auch eine definierte axiale Positionierung der Sekundärseite 32 bezüglich der Primärseite 14 erlangt wird.

Um den Torsionsschwingungsdämper 10 dann, wenn dieser bereits zusammengesetzt ist, an einem Antriebsorgan, also beispielsweise einer Kurbelwelle, festschrauben zu können, weist in Zuordnung zu den Öffnungen 20 im Deckscheibenelement 16 auch das zweite Abtriebsscheibenelement 36 Öffnungen 86 auf. Durch diese hindurch können die der Festlegung dienenden Schraubbolzen bzw. ein auf diese einwirkendes Werkzeug geführt werden.

## Patentansprüche

1. Torsionsschwingungsdämpfer für den Antriebsstrang eines Fahrzeugs, umfassend eine mit einem Antriebsorgan zur gemeinsamen Drehung um eine Drehachse (A) zu verbindende Primärseite (14) und eine vermittels einer Dämpferfederanordnung (28) zur Drehmomentübertragung mit der Primärseite (14) gekoppelte Sekundärseite (32), wobei die Sekundärseite (32) ein in seinem radial äußeren Bereich mit der Dämpferfederanordnung (28) zusammenwirkendes erstes Abtriebsscheibenelement (34) umfasst, und ein mit dem ersten Abtriebsscheibenelement (34) vermittels einer axial- oder/und radialelastischen Kopplungsfederanordnung (40) gekoppeltes zweites Abtriebsscheibenelement (36) umfasst, wobei die Kopplungsfederanordnung (40) eine Mehrzahl von mit dem ersten Abtriebsscheibenelement (34) und dem zweiten Abtriebsscheibenelement (36) verbundenen blattfederartigen Federabschnitten (56, 58, 60, 62, 64, 66, 68, 70) umfasst,
**dadurch gekennzeichnet, dass** wenigstens zwei der Federabschnitte (56, 58, 60, 62, 64, 66, 68, 70) sich in einem radialen Bereich zwischen ihrer Verbindung mit dem ersten Abtriebsscheibenelement (34) und dem zweiten Abtriebsscheibenelement (36) überkreuzen.

2. Torsionsschwingungsdämpfer nach Anspruch 1, **dadurch gekennzeichnet, dass** die Federabschnitte (56, 58, 60, 62, 64, 66, 68, 70) bezüglich des zweiten Abtriebsscheibenelements (36) sich im Wesentlichen tangential erstrecken.

3. Torsionsschwingungsdämpfer nach Anspruch 1 oder 2, **dadurch gekennzeichnet, dass** in Umfangsrichtung vier Paare von sich gegenseitig kreuzenden Federabschnitten (56, 58, 60, 62, 64, 66, 68, 70) vorgesehen sind.

4. Torsionsschwingungsdämpfer nach einem der Ansprüche 1-3, **dadurch gekennzeichnet, dass** eine Mehrzahl von wenigstens zwei Federabschnitte (56, 58, 60, 62, 64, 66, 68, 70) bereitstellenden Federelementen (42, 44, 46, 48) vorgesehen ist, wobei jedes Federelement (42, 44, 46, 48) in seinem Mittenbereich mit dem zweiten Abtriebsscheibenelement verbunden ist und in seinen Endbereichen mit dem ersten Abtriebsscheibenelement (34) verbunden ist.

5. Torsinsschwingungsdämpfer nach Anspruch 2 und 4, **dadurch gekennzeichnet, dass** die Federelemente (42, 44, 46, 48) sich bezüglich des zweiten Abtriebsscheibenelements (36) sich im Wesentlichen tangential erstrecken.

6. Torsionsschwingungsdämpfer nach Anspruch 4 oder 5, **dadurch gekennzeichnet, dass** jedes Federelement (42, 44, 46, 48) sich mit zwei anderen Federelementen (42, 44, 46, 48) kreuzt.

7. Torsionsschwingungsdämpfer nach Anspruch 3 und einem der Ansprüche 4-6, **dadurch gekennzeichnet, dass** vier Federelemente (42, 44, 46, 48) sich paarweise im Wesentlichen parallel zueinander erstreckend vorgesehen sind, wobei jedes Federelement (42, 44, 46, 48) eines Paares die beiden Federelemente (42, 44, 46, 48) des anderen Paares kreuzt.

8. Torsionsschwingungsdämpfer nach einem der Ansprüche 1-7 oder dem Oberbegriff des Anspruchs 1, **dadurch gekennzeichnet, dass** eine sekundärseitige Schwungmasse (76) mit dem zweiten Abtriebsscheibenelement (36) verbunden ist.

9. Torsionsschwingungsdämpfer nach Anspruch 8, **dadurch gekennzeichnet, dass** die Schwungmasse (76) ringscheibenartig ausgebildet ist.

10. Torsionsschwingungsdämpfer nach Anspruch 9, **dadurch gekennzeichnet, dass** am zweiten Abtriebsscheibenelement (36) in Umfangsrichtung aufeinanderfolgend mehrere Verbindungsbereiche (50) vorgesehen sind, wobei in wenigstens einem Verbindungsbereich (50) wenigstens ein Federabschnitt (56, 58, 60, 62, 64, 66, 68, 70) der Kopplungsfederanordnung (40) und ein Gegen-Verbindungsbereich (80) der Schwungmasse (76) mit dem zweiten Abtriebsscheibenelement (36) verbunden ist.

11. Torsionsschwingungsdämpfer nach Anspruch 10, **dadurch gekennzeichnet, dass** der Gegen-Verbindungsbereich (80) mit dem zweiten Abtriebsscheibenelement (36) radial außerhalb der Verbindung des Federabschnitts (56, 58, 60, 62, 64, 66, 68, 70) mit dem zweiten Abtriebsscheibenelement (36) verbunden ist.

12. Torsionsschwingungsdämpfer nach einem der Ansprüche 8-10, **dadurch gekennzeichnet, dass** die Schwungmasse (76) aus Blechmaterial aufgebaut ist.

13. Torsionsschwingungsdämpfer nach Anspruch 12, **dadurch gekennzeichnet, dass** die Schwungmasse (76) in ihrem radial äußeren Bereich (78) faltenartig gebogen ist.

14. Torsionsschwingungsdämpfer nach einem der Ansprüche 8-10, dadurch gekennezichnet, dass die Schwungmasse (76) in ihrem radial inneren Bereich mit dem zweiten Abtriebsscheibenelement (36) verbunden ist.

15. Torsionsschwingungsdämpfer nach einem der Ansprüche 8-14, **dadurch gekennzeichnet, dass** das zweite Abtriebsscheibenelement (36) mit der Schwungmasse (76) durch Vernietung verbunden ist.

16. Torsionsschwingungsdämpfer nach einem der Ansprüche 1-15, **dadurch gekennzeichnet, dass** das zweite Abtriebsscheibenelement (36) in seinem radial äußeren Bereich mit der Kopplungsfederanordnung (40) verbunden ist und in seinem radial inneren Bereich einen innenverzahnten Nabenbereich (38) zur Ankopplung an ein Abtriebsorgan umfasst.

17. Torsionsschwingungsdämpfer nach einem der Ansprüche 1-16, **dadurch gekennzeichnet, dass** das zweite Abtriebsscheibenelement (36) mit der Kopplungsfederanordnung (40) durch Vernietung verbunden ist.

## Claims

1. Torsional vibration damper for the drive train of a vehicle, comprising a primary side (14) to be connected to a drive member for joint rotation about a rotational axis (A) and a secondary side (32) coupled to the primary side (14) by means of a damper spring arrangement (28) for the transmission of torque, wherein the secondary side (32) comprises a first driven pulley element (34) which interacts in its radially outer region with the damper spring arrangement (28), and comprises a second driven pulley element (36) which is coupled to the first driven pulley element (34) by means of an axially or/and radially elastic coupling spring arrangement (40), wherein the coupling spring arrangement (40) comprises a plurality of leaf spring-type spring portions (56, 58, 60, 62, 64, 66, 68, 70) connected to the first driven pulley element (34) and the second driven pulley element (36),
**characterized in that** at least two of the spring portions (56, 58, 60, 62, 64, 66, 68, 70) intersect in a radial region between their connection to the first driven pulley element (34) and the second driven pulley element (36).

2. Torsional vibration damper according to Claim 1, **characterized in that** the spring portions (56, 58, 60, 62, 64, 66, 68, 70) extend substantially tangentially in relation to the second driven pulley element (36).

3. Torsional vibration damper according to Claim 1 or 2, **characterized in that** four pairs of mutually intersecting spring portions (56, 58, 60, 62, 64, 66, 68, 70) are provided in the circumferential direction.

4. Torsional vibration damper according to one of Claims 1-3, **characterized in that** a plurality of spring elements (42, 44, 46, 48) providing at least two spring portions (56, 58, 60, 62, 64, 66, 68, 70) is provided, wherein each spring element (42, 44, 46, 48) is connected in its central region to the second driven pulley element and is connected in its end regions to the first driven pulley element (34).

5. Torsional vibration damper according to Claim 2 and 4, **characterized in that** the spring elements (42, 44, 46, 48) extend substantially tangentially in relation to the second driven pulley element (36).

6. Torsional vibration damper according to Claim 4 or 5, **characterized in that** each spring element (42, 44, 46, 48) intersects with two other spring elements (42, 44, 46, 48).

7. Torsional vibration damper according to Claim 3 and one of Claims 4-6, **characterized in that** four spring elements (42, 44, 46, 48) are provided in pairs extending substantially parallel to one another, wherein each spring element (42, 44, 46, 48) of one pair intersects with both spring elements (42, 44, 46, 48) of the other pair.

8. Torsional vibration damper according to one of Claims 1-7 or the preamble of Claim 1, **characterized in that** a centrifugal mass (76) on the secondary side is connected to the second driven pulley element (36).

9. Torsional vibration damper according to Claim 8, **characterized in that** the centrifugal mass (76) is formed in the manner of an annular disc.

10. Torsional vibration damper according to Claim 9, **characterized in that** several connecting regions (50) are provided consecutively in the circumferential direction on the second driven pulley element (36), wherein, in at least one connecting region (50), at least one spring portion (56, 58, 60, 62, 64, 66, 68, 70) of the coupling spring arrangement (40) and one counter-connecting region (80) of the centrifugal mass (76) is connected to the second driven pulley element (36).

11. Torsional vibration damper according to Claim 10, **characterized in that** the counter-connecting region (80) is connected to the second driven pulley element (36) radially outside of the connection of the spring portion (56, 58, 60, 62, 64, 66, 68, 70) to the second driven pulley element (36).

12. Torsional vibration damper according to one of Claims 8-10, **characterized in that** the centrifugal mass (76) is composed of sheet metal material.

13. Torsional vibration damper according to Claim 12, **characterized in that** the centrifugal mass (76) is bent in a fold-like manner in its radially outer region (78).

14. Torsional vibration damper according to one of Claims 8-10, **characterized in that** the centrifugal mass (76) is connected in its radially inner region to the second driven pulley element (36).

15. Torsional vibration damper according to one of Claims 8-14, **characterized in that** the second driven pulley element (36) is connected to the centrifugal mass (76) by riveting.

16. Torsional vibration damper according to one of Claims 1-15, **characterized in that** the second driven pulley element (36) is connected in its radially outer region to the coupling spring arrangement (40) and in its radial inner region comprises an internally toothed hub region (38) for coupling to a drive member.

17. Torsional vibration damper according to one of Claims 1-16, **characterized in that** the second driven pulley element (36) is connected to the coupling spring arrangement (40) by riveting.

## Revendications

1. Amortisseur de vibrations torsionnelles pour la chaîne cinématique d'un véhicule, comportant un côté primaire (14) devant être relié à un organe d'entraînement pour tourner conjointement autour d'un axe de rotation (A) et un côté secondaire (32) accouplé au côté primaire (14) au moyen d'un agencement de ressorts d'amortissement (28) pour la transmission de couple, le côté secondaire (32) comportant un premier élément de disque de sortie (34) coopérant avec l'agencement de ressorts d'amortissement (28) dans sa région radialement extérieure et comportant un deuxième élément de disque de sortie (36) accouplé au premier élément de disque de sortie (34) au moyen d'un agencement de ressorts d'accouplement (40) axialement et/ou radialement élastique, l'agencement de ressorts d'accouplement (40) comportant une pluralité de sections de ressort de type ressort à lame (56, 58, 60, 62, 64, 66, 68, 70) reliées au premier élément de disque de sortie (34) et au deuxième élément de disque de sortie (36),
**caractérisé en ce qu'**au moins deux des sections de ressort (56, 58, 60, 62, 64, 66, 68, 70) se croisent dans une région radiale entre leur liaison au premier élément de disque de sortie (34) et le deuxième élément de disque de sortie (36).

2. Amortisseur de vibrations torsionnelles selon la revendication 1, **caractérisé en ce que** les sections de ressort (56, 58, 60, 62, 64, 66, 68, 70) s'étendent essentiellement tangentiellement par rapport au deuxième élément de disque de sortie (36).

3. Amortisseur de vibrations torsionnelles selon la revendication 1 ou 2, **caractérisé en ce que** quatre paires de sections de ressort (56, 58, 60, 62, 64, 66, 68, 70) se croisant mutuellement sont prévues dans la direction périphérique.

4. Amortisseur de vibrations torsionnelles selon l'une quelconque des revendications 1 à 3, **caractérisé en ce qu'**une pluralité d'éléments de ressort (42, 44, 46, 48) produisant au moins deux sections de ressort (56, 58, 60, 62, 64, 66, 68, 70) est prévue, chaque élément de ressort (42, 44, 46, 48) étant relié au deuxième élément de disque de sortie dans sa région centrale et étant relié au premier élément de disque de sortie (34) dans ses régions d'extrémité.

5. Amortisseur de vibrations torsionnelles selon les revendications 2 et 4, **caractérisé en ce que** les éléments de ressort (42, 44, 46, 48) s'étendent essentiellement tangentiellement par rapport au deuxième élément de disque de sortie (36).

6. Amortisseur de vibrations torsionnelles selon la revendication 4 ou 5, **caractérisé en ce que** chaque élément de ressort (42, 44, 46, 48) croise deux autres éléments de ressort (42, 44, 46, 48).

7. Amortisseur de vibrations torsionnelles selon la revendication 3 et l'une quelconque des revendications 4 à 6, **caractérisé en ce que** quatre éléments de ressort (42, 44, 46, 48) sont prévus de manière à s'étendre par paires essentiellement parallèlement l'un à l'autre, chaque élément de ressort (42, 44, 46, 48) d'une paire croisant les deux éléments de ressort (42, 44, 46, 48) de l'autre paire.

8. Amortisseur de vibrations torsionnelles selon l'une quelconque des revendications 1 à 7 ou selon le préambule de la revendication 1, **caractérisé en ce qu'**une masse d'inertie (76) située du côté secondaire est reliée au deuxième élément de disque de sortie (36) .

9. Amortisseur de vibrations torsionnelles selon la revendication 8, **caractérisé en ce que** la masse d'inertie (76) est réalisée sous forme de disque annulaire.

10. Amortisseur de vibrations torsionnelles selon la revendication 9, **caractérisé en ce que** plusieurs régions de liaison (50) sont prévues les unes à la suite des autres dans la direction périphérique sur le deuxième élément de disque de sortie (36), au moins une section de ressort (56, 58, 60, 62, 64, 66, 68, 70) de l'agencement de ressorts d'accouplement (40) et une région de liaison conjuguée (80) de la masse d'inertie (76) étant reliées au deuxième élément de disque de sortie (36) dans au moins une région de liaison (50).

11. Amortisseur de vibrations torsionnelles selon la revendication 10, **caractérisé en ce que** la région de liaison conjuguée (80) est reliée au deuxième élément de disque de sortie (36) radialement à l'extérieur de la liaison de la section de ressort (56, 58, 60, 62, 64, 66, 68, 70) au deuxième élément de disque de sortie (36).

12. Amortisseur de vibrations torsionnelles selon l'une quelconque des revendications 8 à 10, **caractérisé en ce que** la masse d'inertie (76) est réalisée en matériau de tôle.

13. Amortisseur de vibrations torsionnelles selon la revendication 12, **caractérisé en ce que** la masse d'inertie (76) est pliée à la manière d'un pli dans sa région (78) radialement extérieure.

14. Amortisseur de vibrations torsionnelles selon l'une quelconque des revendications 8 à 10, **caractérisé en ce que** la masse d'inertie (76) est reliée au deuxième élément de disque de sortie (36) dans sa région radialement intérieure.

15. Amortisseur de vibrations torsionnelles selon l'une quelconque des revendications 8 à 14, **caractérisé en ce que** le deuxième élément de disque de sortie (36) est relié à la masse d'inertie (76) par rivetage.

16. Amortisseur de vibrations torsionnelles selon l'une quelconque des revendications 1 à 15, **caractérisé en ce que** le deuxième élément de disque de sortie (36) est relié à l'agencement de ressorts d'accouplement (40) dans sa région radialement extérieure et comporte dans sa région radialement intérieure une région de moyeu à denture intérieure (38) pour l'accouplement à un organe de sortie.

17. Amortisseur de vibrations torsionnelles selon l'une quelconque des revendications 1 à 16, **caractérisé en ce que** le deuxième élément de disque de sortie (36) est relié à l'agencement de ressorts d'accouplement (40) par rivetage.
